Europäisches Patentamt

(19) European Patent Office

Office européen des brevets

(11) Numéro de publication : **0 449 700 A1**

(12) **DEMANDE DE BREVET EUROPEEN**

(21) Numéro de dépôt : **91400724.0**

(22) Date de dépôt : **18.03.91**

(51) Int. Cl.⁵ : **B60R 22/18**

(30) Priorité : **30.03.90 FR 9004123**

(43) Date de publication de la demande :
**02.10.91 Bulletin 91/40**

(84) Etats contractants désignés :
**BE DE ES GB IT NL SE**

(71) Demandeur : **ECIA - EQUIPEMENTS ET
COMPOSANTS POUR L'INDUSTRIE
AUTOMOBILE
F-25400 Audincourt (Doubs) (FR)**

(72) Inventeur : **Fourrey, François
34, rue du Petit Chênois
F-25200 Montbeliard (FR)**
Inventeur : **Verhoog, Roel
32, rue G. Cuvier
F-25700 Valentigney (FR)**

(74) Mandataire : **Mestre, Jean et al
c/o CABINET LAVOIX 2, place d'Estienne
d'Orves
F-75441 Paris Cédex 09 (FR)**

(54) **Renvoi de sangle autobloquant pour ceinture de sécurité.**

(57)    Le renvoi de sangle (S) autobloquant comprend une embase (10) avec une semelle (11) pour le montage sur la structure ou coque (C) et avec un support (12) contre lequel la sangle (S) peut être pressée, un verrou (20) avec un sabot (21) articulé à l'aide d'un axe (30) sur l'embase (10) de manière que la sangle (S) puisse passer entre support (12) et sabot (21) et de manière que ce sabot (21) puisse presser la sangle (S) contre ce support (12), et des moyens de sollicitation élastique (40) tendant normalement à éloigner ce sabot (21) de ce suport (12).
    Application aux ceintures de sécurité pour automobiles.

FIG_1

La présente invention concerne les ceintures de sécurité pour véhicule et a plus particulièrement pour objet un renvoi de sangle autobloquant pour ceinture de sécurité destiné notamment à un véhicule automobile terrestre.

Comme on le sait, les pouvoirs publics ont édicté une réglementation aux termes de laquelle les véhicules doivent être équipés de sièges munis de ceintures de sécurité pour leurs occupants. C'est notamment le cas des véhicules automobiles terrestres.

La plupart des véhicules automobiles terrestres contemporains sont munis d'une ceinture de sécurité à trois points d'ancrage et à enrouleur. De la sorte, lorsqu'une telle ceinture est déployée et portée par l'occupant d'un siège, elle comprend essentiellement deux brins actifs de sangle : un brin thoracique et un brin abdominal qui demeurent appliqués contre l'occupant du fait de la tension développée par l'enrouleur. Le brin thoracique s'étend en diagonale, à la manière d'un baudrier, au travers du torse de l'occupant alors que le brin abdominal s'étend transversalement pratiquement au niveau de la ceinture. L'enrouleur, outre la tension qu'il exerce pour maintenir la sangle au contact de son porteur, permet aussi lorsque la ceinture n'est pas utilisée, de la rappeler en position escamotée afin qu'elle ne gîse pas en désordre sur le siège ou le sol du véhicule. L'enrouleur est, habituellement, muni d'un détecteur d'accélération/décélération qui le bloque de manière que la sangle ne puisse pas se dérouler lorsqu'elle est sollicitée brusquement par son occupant afin que ce dernier soit ainsi retenu le cas échéant sur son siège. La longueur de sangle déployée pour une ceinture de sécurité portée par un occupant de corpulence moyenne est de l'ordre de deux mètres ou plus si l'on ajoute à ces brins actifs le brin de manoeuvre qui est déployé entre l'enrouleur placé souvent près du sol et le renvoi de sangle situé à hauteur d'épaule d'un occupant assis.

Lorsqu'un véhicule est soumis à une décélération brutale, telle que par exemple celle qui se manifeste lors d'un choc violent à composante longitudinale, toute l'énergie cinétique de l'occupant est absorbée par la ceinture de sécurité afin de le retenir sur son siège et faire en sorte qu'il ne soit pas projeté vers l'avant. Cette énergie cinétique absorbée par la ceinture de sécurité se traduit par des efforts importants exercés notamment sur l'enrouleur et sur la totalité de la longueur de sangle déployée qui tend ainsi à s'allonger.

On comprend donc que pour satisfaire aux normes en vigueur, il faut construire un enrouleur et confectionner une sangle qui doivent être particulièrement résistants et donc coûteux.

Une des solutions qui a déjà été proposée consiste à faire en sorte que seule une partie de la longueur de sangle déployée et non plus la totalité soit utilisée pour absorber l'énergie cinétique de l'occupant. En ne transmettant pas les efforts à l'enrouleur par l'intermédiaire du brin de manoeuvre, on peut alors construire celui-là d'une manière moins robuste en utilisant des matériaux plus légers et moins coûteux que les matériaux traditionnels.

Une des techniques proposées pour la mise en oeuvre d'une telle solution consiste à utiliser un renvoi de sangle, qui se trouve à l'extrémité supérieure du brin thoracique, avec un arrêtoir. En cas de décélération brusque, cet arrêtoir immobilise la sangle dans le renvoi et fait en sorte que les efforts, absorbés seulement par le brin thoracique et le brin abdominal, ne sont ni transmis au reste de la sangle ni davantage à l'enrouleur. Des modes de réalisation d'une telle technique sont par exemple exposés dans les documents WO 86/OO 585 et Ep O 271 183. Les propositions décrites dans ces documents font appel à des arrêtoirs qui utilisent des mécanismes à blocage par effet de coin. Ces mécanismes comptent des pièces nombreuses et complexes et, de ce fait, sont coûteux à fabriquer, assembler et monter et aussi sont d'une fiabilité douteuse.

Le but de l'invention est de construire un renvoi de sangle autobloquant pour ceinture de sécurité qui soit d'une conception simple, d'une fabrication aisée, d'un assemblage facile et d'un montage commode et donc peu coûteux tout en étant particulièrement fiable.

L'invention a pour objet un renvoi de sangle autobloquant pour ceinture de sécurité qui est destiné à être fixé à une structure ou coque de véhicule et qui est caractérisé en ce qu'il comprend une embase avec une semelle pour le montage sur la structure ou coque et avec un support contre lequel la sangle peut être pressée, un verrou avec un sabot articulé à l'aide d'un axe sur l'embase de manière que la sangle puisse passer entre support et sabot, et de manière que ce sabot puisse presser la sangle contre ce support, et des moyens de sollicitation élastiques tendant normalement à éloigner ce sabot de ce support.

D'autres caractéristiques de l'invention apparaîtront à la lecture de la description et des revendications qui suivent ainsi qu'à l'examen du dessin annexé, donné seulement à titre d'exemple, où :
    – la Figure 1 est une vue perspective, observé de l'arrière, d'un mode de réalisation d'un renvoi de sangle selon l'invention;
    – la Figure 2 est une vue de détail d'un constituant du mode de réalisation de la Figure 1; et,
    – les Figures 3, 4 et 5 sont des vues schématiques, en coupe longitudinale axiale, du mode de réalisation des Figures 1 et 2 représenté dans trois phases différentes de son fonctionnement.

Les ceintures de sécurité pour véhicules, notamment pour véhicules automobiles terrestres, étant bien connues et, en particulier, les renvois de sangle, seul sera décrit ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans la suite de la description un même numéro de référence identifie toujours un élément homologue quel que soit le mode de réalisation.

Pour la commodité de l'exposé, on décrira successivement chacun des constituants d'un renvoi de sangle autobloquant pour ceinture de sécurité suivant l'invention avant d'en expliquer le fonctionnement.

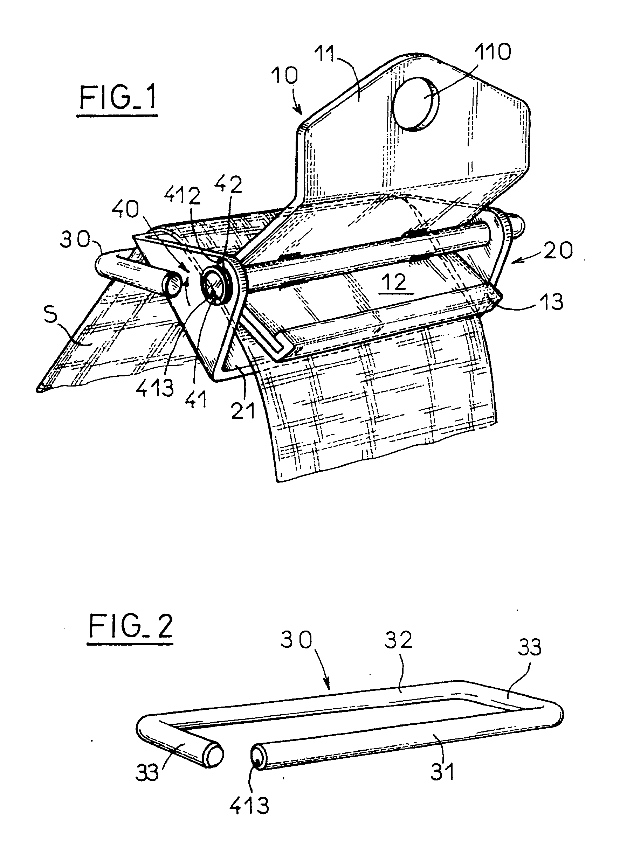

Comme on le voit en particulier sur les Figures 1 et 2, un renvoi de sangle autobloquant pour ceinture de sécurité suivant l'invention, comprend, entre autres, une embase 10, un verrou 20, un axe 30 et des moyens de sollicitation élastique 40.

Ce renvoi de sangle est, par exemple, destiné à équiper un véhicule automobile terrestre et à être monté contre le pied milieu d'une structure ou coque C, séparant les baies de portes latérales avant et arrière d'un véhicule à quatre portes. Ce renvoi est destiné à être équipé d'une sangle S.

Comme on l'observe, l'embase 10 comprend une semelle 11 et un support 12. Ce support 12 est, par exemple, constitué par l'un des versants d'un toit dont l'autre versant est réuni à la semelle. Comme on peut le noter, ce support 12 est incliné relativement à cette semelle 11 dans un sens ascendant qui l'éloigne de celle-ci. La semelle 11 est transpercée d'un oeil 110 destiné à recevoir un dispositif de fixation pour maintenir le renvoi de sangle sur la structure ou coque C du véhicule. Ce dispositif de fixation, non représenté, est par exemple une vis, un boulon ou un rivet. De préférence, ce support 12 est muni d'un patin 13 qui présente un rebord 131 en U pour chevaucher le support 12 et à l'opposé un biseau 132. On reviendra par la suite sur le rôle de ce patin dont la configuration est clairement illustrée sur le dessin.

Le verrou 20 comprend un sabot 21. Ce verrou 20 a, de préférence, la forme d'un étrier dont le sabot 21 sert de pont pour relier deux joues 22 latérales. Chacune de ces joues est transpercée d'un trou 210 et l'une au moins d'entre elles, à proximité de ce trou, est munie d'un logement 412 pour les raisons qui apparaîtront par la suite.

Ce verrou 20 est articulé sur l'embase 10 à l'aide d'un axe 30. Cet axe a, de préférence, une configuration en rectangle dont l'un des grands côtés parallèles constitue l'un un tourillon 31 fixe à l'embase 10 par toute technique courante appropriée et sur lequel est monté basculant le verrou 20, et dont l'autre constitue un appui 32 situé de manière que le verrou 20 soit placé entre ces tourillon 31 et appui 32, pour les raisons que l'on comprendra par la suite. Comme on peut l'observer, notamment sur la Figure 2, les grands côtés parallèles de ce rectangle qui est ouvert, qui constituent ce tourillon 31 et cet appui 32 sont réunis par une branche 33. L'extrémité libre du tourillon 31 présente une tranche dans laquelle est ménagé un logement 413 pour les raisons que l'on comprendra par la suite.

Les moyens de sollicitation élastique 40 sont, par exemple, un ressort en spirale de préférence un tronçon de ressort à boudin dont l'un des bouts recourbés, par exemple, le bout 41 est ancré à l'axe 30 grâce au logement 413 où il est engagé et dont l'autre des bouts 42 est ancré au verrou 20 grâce au logement 412 où il est aussi engagé. Le couple développé par ce ressort est tel qu'il tend à normalement éloigner le sabot 21 du support 12, comme schématisé par une flèche sur la figure 1.

Tout ceci ressort clairement de l'examen des Figures 1 et 2 en particulier.

La sangle S, dont seule une partie est illustrée, est enfilée dans le renvoi de sangle comme représenté. Le brin de manoeuvre en provenance de l'enrouleur passe entre le support 12 et le verrou 20, puis est replié pour passer entre le verrou 20 et l'appui 32 afin de former le brin thoracique. Cette partie de sangle illustrée peut donc se décomposer en un brin amont $S_1$, pour ce qui est entre l'enrouleur non représenté et le renvoi de sangle, un brun intermédiaire $S_2$ pour ce qui est le renvoi de sangle, et un brin aval $S_3$ pour ce qui poursuit la sangle au delà en direction d'une boucle non représentée.

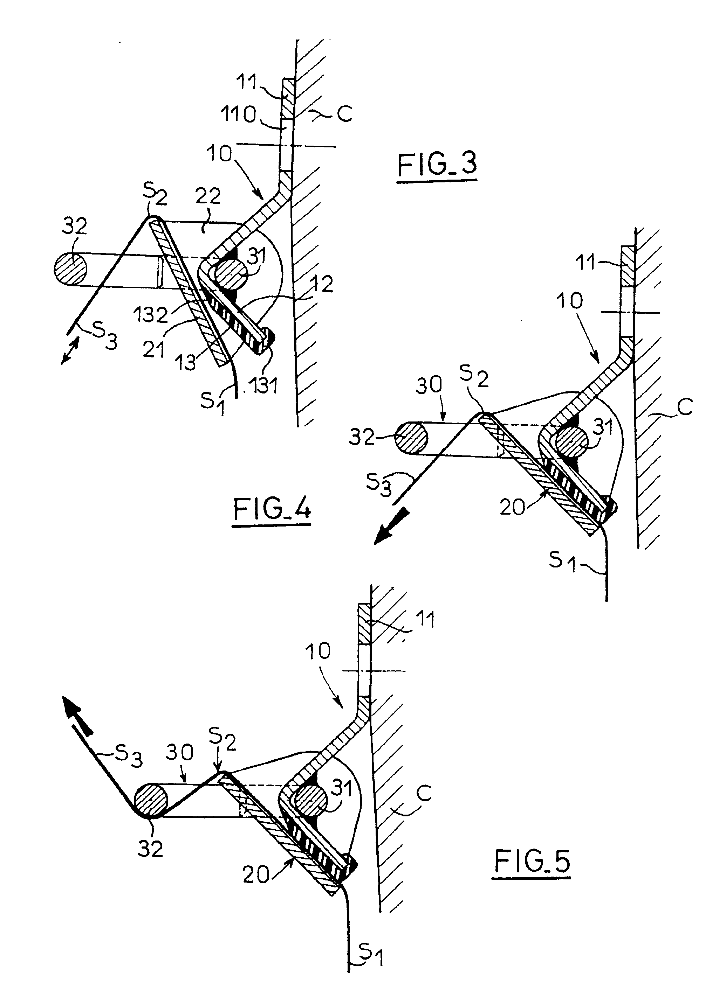

On se reportera maintenant aux Figures 3, 4 et 5 qui illustrent le fonctionnement de ce mode de réalisation d'un renvoi de sangle autobloquant pour ceinture de sécurité selon l'invention.

Lorsqu'un occupant met ou enlève sa ceinture de sécurité, la sangle de celle-ci se déplace à petite vitesse comme schématisé par la flèche double et le renvoi de sangle occupe la position dans laquelle il est illustré sur la Figure 3, de par l'action du couple exercé par les moyens de sollicitation élastique. On peut observer que dans cette position le patin 13 du support 12 est éloigné du sabot 21 et que donc la sangle S peut glisser librement entre eux. Ce glissement est facilité par la présence du biseau 132.

Si l'occupant est violemment projeté vers l'avant par suite d'une décélération extrêmement brutale telle que celle résultant d'un heurt frontal, une traction vive s'exerce sur le brin aval $S_3$ comme représenté par une flèche en trait gras sur la figure 4. Cet effort développe un couple important qui s'oppose à celui développé par les moyens élastiques et le verrou bascule. Ce basculement fait que le patin se rapproche de l'appui et serre fermement le brin amont $S_1$ de la sangle qui est ainsi immobilisé. On observe donc qu'aucun effort n'est transmis à l'enrouleur par le brin de manoeuvre et que seule la longueur de sangle déployée pour les brins actifs, entre le renvoi de sangle autobloquant selon l'invention et les points d'ancrage du brin ventral, se trouve soumise à une extension.

On observera que le renvoi de sangle selon l'invention est aussi efficace en cas de retournement du véhicule à la suite d'un tonneau comme cela résulte de l'examen de la Figure 5 où le renvoi de sangle selon l'invention est dessiné avec une orientation inverse de celle qu'il occupe dans une telle circonstance. En effet, dans un tel cas, le brin aval $S_3$ reposerait sur l'appui 32 et ferait basculer le verrou 20 dans le sens indiqué précédemment à propos de la Figure 4 pour bloquer fermement la sangle.

L'embase et le verrou sont fabriqués de préférence à partir de tôles appropriées découpées et mises en forme selon des techniques classiques et l'axe est, par exemple, fait à partir d'une tige métallique d'un matériau de nuance adaptée coudée trois fois. Dans un tel cas, la tige est fixée sur l'embase par soudage, par exemple, comme illustré schématiquement sur le dessin par plusieurs points de soudure. Le patin est, par exemple, fait en un matériau qui est à la fois souple pour bien épouser la forme de la sangle lors de son pincement et qui aussi présente un coefficient de frottement relatif, par rapport à la sangle, important de manière à assurer un blocage efficace; ce patin est, par exemple, fait en un matériau synthétique tel qu'un élastomère.

Il est clair que, par exemple, l'embase peut avoir une autre configuration par exemple en J dont la partie rectiligne sert de semelle et l'autre partie de préférence aplanie sert de support. De même au lieu d'être planes, les parties coopérantes du support et du sabot peuvent avoir des courbures complémentaires dirigées convenablement.

De ce qui précède, on comprend tous les avantages qu'apporte un renvoi de sangle autobloquant pour ceinture de sécurité selon l'invention. Comme on a pu le relever, les efforts qui résultent d'un choc sont essentiellement supportés notamment par le point d'ancrage supérieur c'est à dire le renvoi de sangle, et par conséquent, l'enrouleur et sa fixation n'ont plus besoin de satisfaire aux prescriptions d'un cahier des charges aussi sévère. L'effort exercé sur la sangle ne tend plus à resserrer les spires sur la bobine de l'enrouleur et l'allongement total de la sangle de la ceinture est notablement réduit puisque la longueur déployée soumise à l'effort est plus restreinte et limitée aux seuls brins actifs thoracique et abdominal.

**Revendications**

1 - Renvoi de sangle (S) autobloquant pour ceinture de sécurité destiné à être fixé à une structure ou coque (C) de véhicule, caractérisé en ce qu'il comprend une embase (10) avec une semelle (11) pour le montage sur la structure ou coque (C) et avec un support (12) contre lequel la sangle (S) peut être pressée, un verrou (20) avec un sabot (21) articulé à l'aide d'un axe (30) sur l'embase (10) de manière que la sangle (S) puisse passer entre support (12) et sabot (21) et de manière que ce sabot (21) puisse presser la sangle (S) contre ce support (12), et des moyens de sollicitation élastique (40) tendant normalement à éloigner ce sabot (21) de ce support (12).

2 - Renvoi de sangle selon la revendication 1, caractérisé en ce que ce support (12) est incliné relativement à cette semelle (11) dans un sens ascendant qui l'éloigne de celle-ci.

3 - Renvoi de sangle selon la revendication 1 ou 2, caractérisé en ce que ce support (12) est un versant d'un toit dont l'autre versant est réuni à la semelle (11).

4 - Renvoi de sangle selon l'une quelconque des revendications 1 à 3, caractérisé en ce que ce verrou (20) a la forme d'un étrier avec deux joues (22) parallèles qui sont placées de part et d'autre de ce support (12), qui reçoivent cet axe (30) et qui sont réunies par ce sabot (21) formant pont.

5 - Renvoi de sangle selon l'une quelconque des revendications 1 à 4, caractérisé en ce que cet axe (30) a une configuration en rectangle dont les grands côtés parallèles constituent l'un un tourillon (31) fixé à l'embase (10) et sur lequel est monté basculant le verrou (20), et l'autre un appui (32) situé de manière que ce verrou (20) soit placé entre tourillon (31) et appui (32).

6 - Renvoi de sangle selon l'une quelconque des revendications 1 à 5, caractérisé en ce que ces moyens de sollicitation élastiques (40) sont un ressort dont un bout (41) est ancré à cet axe (30) et dont l'autre bout (42) est ancré à ce verrou (20).

7 - Renvoi de sangle selon la revendication 5 ou 6, caractérisé en ce que cet axe (30) a la configuration d'un rectangle ouvert dont les grands côtés parallèles constituant ces tourillon (31) et appui (32) sont réunis par une branche (33) et en ce que ce ressort (40) est un ressort en spirale enfilé sur l'extrémité libre du tourillon (31) et dont l'un (41) des bouts est engagé dans un logement (413) de la tranche de cette extrémité et dont l'autre (42) des bouts est engagé dans un logement (412) d'une joue (22) du verrou (20).

8 - Renvoi de sangle selon l'une quelconque des revendications 1 à 7, caractérisé en ce que ce support (12) est muni d'un patin (13)

9 - Renvoi de sangle selon la revendication 8, caractérisé en ce que ce patin (13) présente un rebord (131) en U pour chevaucher ce support (12) et à l'opposé un biseau (132).

10- Renvoi de sangle selon l'une quelconque des revendications 1 à 9, caractérisé en ce que le support (12) et le sabot (21) sont plans.

FIG_1

FIG_2

FIG_3

FIG_4

FIG_5

EP 0 449 700 A1

**Office européen des brevets**

**RAPPORT DE RECHERCHE EUROPEENNE**

Numero de la demande

EP     91 40 0724

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WO-A-8503676 (BRITAX-KOLB)<br>* le document en entier *<br>--- | 1 | B60R22/18 |
| A | DE-A-2414952 (SIGMATEX)<br>* le document en entier *<br>----- | 1 | |

**DOMAINES TECHNIQUES RECHERCHES (Int. Cl.5 )**

B60R

Le présent rapport a été établi pour toutes les revendications

| Lieu de la recherche | Date d'achèvement de la recherche | Examinateur |
|---|---|---|
| BERLIN | 12 JUILLET 1991 | STANDRING, M |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)